# EUROPEAN PATENT APPLICATION

(11) **EP 2 741 478 A1**
(43) Date of publication of application: **11.06.2014**
(21) Application number: 13189888.4
(22) Date of filing: 23.10.2013
(51) Int. Cl.: H04M 1/57, H04M 3/42, H04M 1/253, H04M 3/436

(54) **Method and apparatus for providing caller information upon reception of an incoming call in a communication system supporting enterprise mobility communication**

(30) Priority: 23.10.2012 KR 20120117813
(71) Applicant: Samsung Electronics Co., Ltd, Gyeonggi-do 443-742 (KR)
(72) Inventor: Kim, Jong-Seok, 443-742 Gyeonggi-do (KR)
(74) Representative: Nederlandsch Octrooibureau

(57) **Abstract**

A method for providing caller information about a caller to a terminal, upon reception of an incoming call from the caller in a communication system supporting enterprise mobility communication is provided. The method includes receiving a phone number of the caller from the terminal that has registered with an enterprise mobility system, accessing at least one server providing a service for enterprise mobility communication and acquiring a service history between the terminal and the caller, and providing the service history on a screen of the terminal, indicating an active call state.

## Description

### BACKGROUND OF THE INVENTION

### 1. Field of the Invention

The present invention generally relates to a method and apparatus for providing caller information associated with work information of a called terminal, upon reception of an incoming call in a communication system supporting enterprise mobility communication.

### 2. Description of the Related Art

In general, a company uses a Private Branch Exchange (PBX) for intra-company communication. Owing to the development of communication technology and the wide deployment of an Internet Protocol (IP) network, many companies use an IP-PBX. If a PBX is used, a call is originated within a company by dialing an extension number without an exchange number, and a call is originated from outside the company by using both an exchange number and an extension number. The exchange number is assigned by a communication network operator (a key telecommunications service provider or a special category telecommunications service provider) connected to the PBX.

With the introduction of IP-PBX to a company, an employee can use a telephone system within the company through Internet connectivity from outside the company by installing a fixed terminal or installing a Voice over Internet Protocol (VoIP) soft phone in a laptop computer or a smartphone.

If a VoIP soft phone is installed in a smartphone, a user has two phone numbers: a mobile phone number assigned by a communication network operator that provides a communication service to smartphones and an intra-company phone number for the VoIP smart phone used in the company intranet. As more and more smartphones use an open platform that enables a user to install and delete software based on open standards, VoIP soft phones are being installed in more smartphones.

Compared to a feature phone, a smartphone includes various functions. Among them, a white page function provides fragmentary additional information about a caller, upon reception of an incoming call. At present, very limited additional information is available, such as information about a caller and a location on a map.

### SUMMARY OF THE INVENTION

Aspects of the present invention are provided to address at least the above-mentioned problems and/or disadvantages and to provide at least the advantages described below. Accordingly, an aspect of the present invention is to provide a method and apparatus for, upon reception of an incoming call through an Internet Protocol Private Branch eXchange (IP-PBX) in a communication system supporting enterprise mobility communication, additionally providing a called terminal with caller information associated with an extension number of the incoming call among service histories received from servers that provide intra-company communication services, and displaying the caller information on a screen of the called terminal.

In accordance with an aspect of the present invention, a method for providing caller information about a caller to a terminal, upon reception of an incoming call from the caller in a communication system supporting enterprise mobility communication is provided. The method includes receiving a phone number of the caller from the terminal that has registered in an enterprise mobility system, accessing at least one server providing a service for enterprise mobility communication and acquiring a service history between the terminal and the caller, and providing the service history on a screen of the terminal, indicating an active call state.

In accordance with another aspect of the present invention, a method for receiving caller information about an incoming call at a terminal, upon reception of the incoming call from a caller in a communication system supporting enterprise mobility communication is provided. The method includes transmitting a phone number of the caller to an enterprise mobility system, upon recognition of the incoming call, and receiving basic subscriber information about the terminal and the caller from an Internet Protocol Private Branch eXchange (IP-PBX) and a service history mapped to the basic subscriber information from the enterprise mobility system.

In accordance with another aspect of the present invention, an enterprise mobility system for providing caller information about a caller to a terminal, upon reception of an incoming call from the caller at the terminal in a communication system supporting enterprise mobility communication is provided. The enterprise mobility system includes a receiver configured to receive a phone number of the caller from the terminal that has registered in the enterprise mobility system, a controller configured to access at least one server providing a service for enterprise mobility communication and to acquire a service history between the terminal and the caller, and a transmitter configured to provide the service history on a screen of the terminal, indicating an active call state.

In accordance with another aspect of the present invention, a terminal for receiving caller information about an incoming call, upon reception of the incoming call from a caller in a communication system supporting enterprise mobility communication is provided. The terminal includes a transmitter configured to transmit a phone number of the caller to an enterprise mobility system, upon recognition of reception of the incoming call, and a receiver configured to receive basic subscriber information about the terminal and the caller from an IP-PBX and a service history mapped to the basic subscriber information from the enterprise mobility system.

### BRIEF DESCRIPTION OF THE DRAWINGS

The above and other aspects, features, and advantages of certain embodiments of the present invention will be more apparent from the following description taken in conjunction with the accompanying drawings, in which:
FIG. 1 illustrates a general communication system supporting enterprise mobility communication;
FIG. 2A is a signal flow diagram for an operation for providing caller information, upon reception of an incoming call to a Fixed Mobile Convergence (FMC) terminal in a general enterprise communication environment;
FIGS. 2B and 2C illustrate screens displaying basic caller information in an FMC terminal to which a call is incoming;
FIG. 3 illustrates a method for acquiring and managing subscriber information about terminals by an Enterprise Mobility System (EMS) in a communication system that provides an enterprise communication environment according to an embodiment of the present invention;
FIG. 4A is a signal flow diagram for an operation for providing additional caller information to a called terminal upon reception of an incoming call in a communication system supporting intra-company communication according to an embodiment of the present invention;
FIG. 4B illustrates a screen of a called terminal that displays basic caller information according to an embodiment of the present invention;
FIG. 4C illustrates a screen of a called terminal that displays additional caller information according to an embodiment of the present invention;
FIG. 5 is a flowchart illustrating an operation of an Enterprise Mobility System (EMS) according to an embodiment of the present invention;
FIG. 6 is a signal flow diagram of an operation for acquiring additional caller information in an EMS according to an embodiment of the present invention;
FIG. 7 is a flowchart illustrating an operation of a terminal according to an embodiment of the present invention;
FIGS. 8A, 8B and 8C illustrate screens of a called terminal operating in an intra-company phone mode, which display additional caller information, upon reception of an incoming call according to an embodiment of the present invention;
FIGS. 9A and 9B illustrate incoming call screens of a called terminal, which display display setting information in relation to additional caller information according to an embodiment of the present invention;
FIGS. 9C, 9D, 9E and 9F illustrate screens of a called terminal operating in a mobile call mode, which display additional caller information upon reception of an incoming of a call according to an embodiment of the present invention;
FIG. 10 is a block diagram of an EMS according to an embodiment of the present invention; and
FIG. 11 is a block diagram of a terminal according to an embodiment of the present invention.

### DETAILED DESCRIPTION OF EMBODIMENTS OF THE PRESENT INVENTION

The following description is made with reference to the accompanying drawings to assist in a comprehensive understanding of embodiments of the present invention as defined by the claims and their equivalents. It includes various specific details to assist in that understanding. Throughout the drawings, similar reference numerals will be understood to refer to similar parts, components, and structures.

Accordingly, those of ordinary skill in the art will recognize that various changes and modifications to the embodiments described herein can be made without departing from the scope and spirit of the invention. In addition, descriptions of well-known functions and constructions may be omitted for clarity and conciseness.

The terms and words used in the following description and claims are not limited to their dictionary meanings, but are merely used to enable a clear and consistent understanding of the invention. Accordingly, it should be apparent to those skilled in the art that the following description of embodiments of the present invention is provided for illustration purposes only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Use of the term "substantially" refers to a scenario in which the recited characteristic, parameter, or value need not be achieved exactly, but that deviations or variations, including, for example, tolerances, measurement error, measurement accuracy limitations and other factors known to those of skill in the art, may occur in amounts that do not preclude the effect the characteristic was intended to provide.

Embodiments of the present invention are provided to achieve at least the above-described technical aspects of the present invention. In an implementation, defined entities may have the same names, to which the present invention is not limited. Thus, embodiments of the present invention can be implemented with the same or ready modifications in a system having a similar technical background.

The present invention provides a method and apparatus for, upon reception of an incoming call through an Internet Protocol Private Branch eXchange (IP-PBX) in an enterprise communication environment, additionally providing caller information associated with work information of a called terminaland displaying the caller information on an incoming call screen of the called terminal.

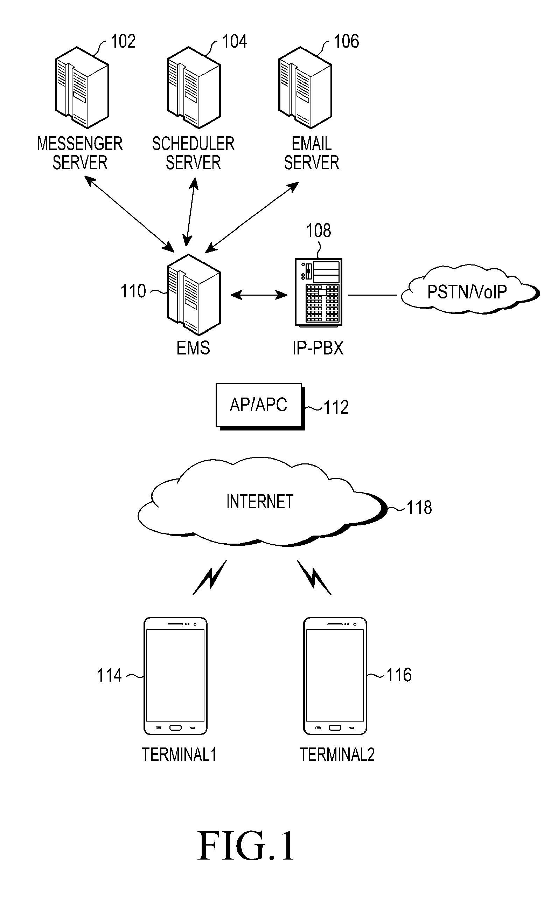

FIG. 1 illustrates a general communication system supporting enterprise mobility communication.

Referring to FIG. 1, the communication system includes a messenger server 102, a scheduler server 104, an e-mail server 106, an IP-PBX 108, an Enterprise Mobility System (EMS) 110, an Access Point (AP)/AP Controller (APC) 112, and first and second Fixed Mobile Convergence (FMC) terminals 114 and 116 (FMC terminal 1 and FMC terminal 2).

Along with the recent trend toward wireless and wired convergence, if users of FMC terminal 1 and FMC terminal 2 are located within a company intranet, FMC terminal 1 and FMC terminal 2 are used as intra-company phones, and if the users of FMC terminal 1 and FMC terminal 2 are located outside the company intranet, FMC terminal 1 and FMC terminal 2 are used as general mobile phones.

In conjunction with the messenger server 102, the scheduler server 104, and the email server 106, the EMS 110 provides a search function to search for service histories managed by the messenger server 102, the scheduler server 104, and the email server 106. For this purpose, the EMS 110 manages subscriber information about terminals registered in the EMS 110. The subscriber information includes basic subscriber information. Particularly, the subscriber information further includes keys mapped to intra-company phone numbers assigned to employees within a company intranet, with which to request work data to the messenger server 102, the scheduler server 104, and the email server 106. For example, the keys may include a messenger Identifier (ID) used to request work data to the messenger server 102, an employee number used to request work data to the scheduler server 104, and an email address used to request work data to the email server 106. The EMS 110 transmits a key search request regarding an employee number to the messenger server 102, the scheduler server 104, and the email server 106. Then the messenger server 102, the scheduler server 104, and the email server 106 provide work data mapped to the employee number to the EMS 110 in response to the key search request. Specifically, regarding the email server 106, the EMS 110 has acquired an email address of each registered terminal from subscriber information about the registered terminal, as a key used to request an email transmission/reception record stored for each email address in the email server 106. For example, if a user with an extension number '1234' dials an extension number '4567', the EMS 110 transmits a work data search request including a query about a key and an email address 'a@mail.com' corresponding to the extension number '1234' and a key and an email address 'b@mail.com' corresponding to the extension number '4567' to the email server 106. The email server 106 searches for an email transmission/reception record between 'a@mail.com' and 'b@mail.com' and transmits the detected email transmission/reception record to the EMS 110.

Likewise, if the EMS 100 has acquired a messenger ID or a scheduling ID as a key with which to request a message transmission/reception record or a scheduling record to the messenger server 102 or the scheduler server 104 from subscriber information about each registered terminal, the EMS 100 may transmit a transmission/reception record search request regarding a messenger record or a scheduling record corresponding to the messenger ID or the scheduling ID to the messenger server 102 or the scheduler server 104 and may acquire a search result in response to the request from the messenger server 102 or the scheduler server 104.

The IP-PBX 108 is an Internet-based private exchange that has functions and authority for various operations and managements including processing of IP calls connected through the Internet, connection to an external voice network (i.e. a Public Switched Telephone Network (PSTN)/VoIP), dial planning, providing an additional telephone service, a directory service, programming interface, and the like.

The AP/APC 112, which provides Internet connectivity or Wireless Local Area Network (WLAN) connectivity, provides information about the location of a terminal in conjunction with the EMS 110.

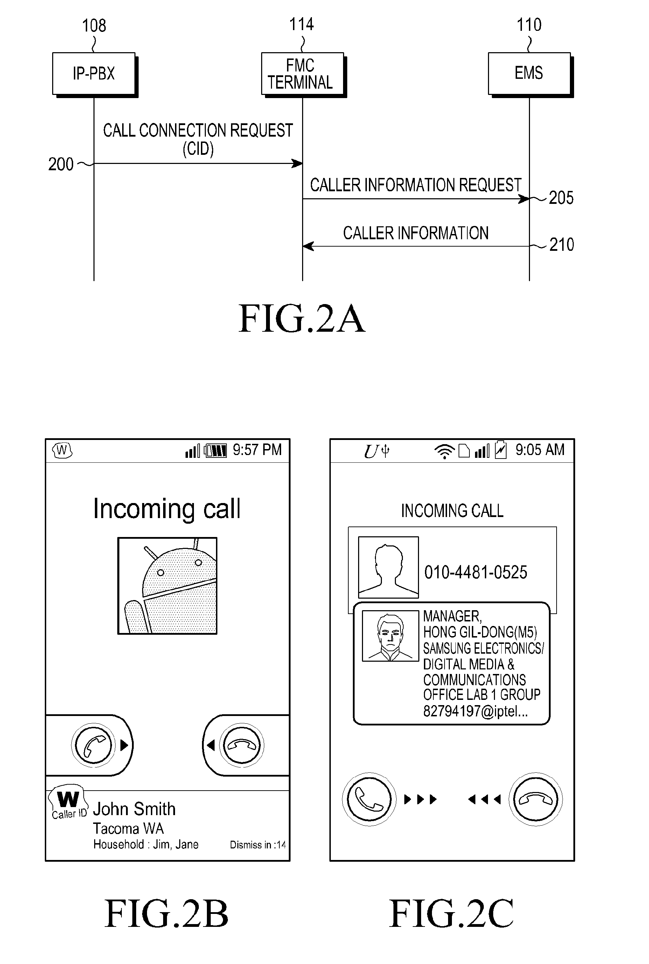

FIG. 2A is a signal flow diagram of an operation for providing basic caller information, upon reception of an incoming call to an FMC terminal in a general enterprise communication environment. For convenience of description, it is assumed with reference to FIG. 1 that a caller has accessed the IP-PBX 108 and requested a call connection to an intra-company phone number of FMC terminal 1.

Referring to FIG. 2A, the IP-PBX 108 transmits a call connection request for the caller to FMC terminal 1 in step 200. The call connection request includes a Caller Identifier (CID), in this case being a phone number of the caller. The phone number of the caller may be an intra-company phone number, a mobile phone number, or any other phone number included in a directory. FMC terminal 1 transmits a caller information request including the CID to the EMS 110 in step 205.

In step 210, the EMS 110 transmits caller information mapped to the intra-company phone number of the caller to FMC terminal 1. The caller information (hereinafter, referred to as 'basic caller information') generally includes basic subscriber information about the caller managed with respect to the intra-company phone number in the IP-PBX 108. The basic subscriber information includes information about a name, a phone number, a company, a department, an email address, an anniversary, and the like of the caller.

FIGS. 2B and 2C illustrate different screens displaying basic caller information in an FMC terminal to which a call is incoming, showing different embodiments of the screen displaying different configurations of the basic caller information.

Referring to FIG. 2B, for example, a message indicating a call request, 'Incoming Call' is displayed at the top of a screen displayed on a display of FMC terminal 1, and a caller name 'John Smith' and a category into which the caller is classified, 'Household' set in a phonebook stored in FMC terminal 1 are displayed at the bottom of the screen. The category of the caller is a group into which the caller is classified by the user, such as household, colleagues, friends, and the like.

Referring to FIG. 2C, a relatively small screen displaying the name/job position, company, department, and email address of the caller is overlapped partially over a called screen displaying a phone number of the caller on the display of FMC terminal 1.

Hereinbelow, the present invention provides a method and apparatus for providing additional caller information in addition to basic caller information to a called terminal, upon reception of an incoming call in an enterprise communication environment-based communication system. Specifically, additional caller information is created based on work-related histories between a called and a caller. For example, the work-related histories may include information acquired from the above-described servers that provide services for intra-company communication, for example, a messenger use history, a scheduling history, and an email transmission/reception history. Upon detection of an incoming call to a specific terminal, an EMS collects work-related history information between a caller and a called terminal through interaction with a plurality of mobile systems within a company, servers that provide applications of the called terminal, such as messenger and scheduling, an IP-PBX, and an e-mail server. The EMS determines an order of displaying the collected work-related history information and whether to select the collected work-related history information as additional caller information according to priority levels of the collected work-related history information. The EMS arranges the work-related history information according to predetermined conditions and displays the arranged work-relayed history information on a screen of a called terminal.

Accordingly, embodiments of the present invention provide various methods for specifically configuring additional caller information and displaying the additional caller information on a called terminal.

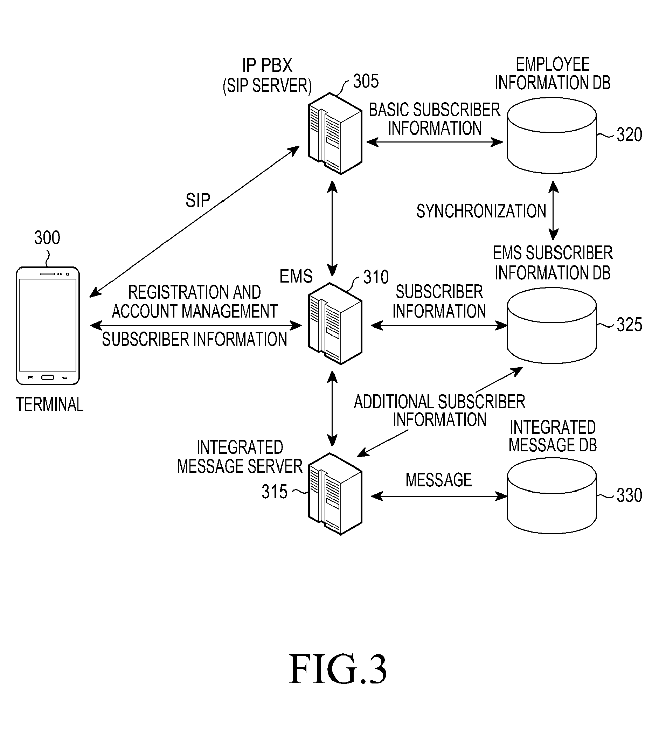

FIG. 3 illustrates a method for acquiring and managing subscriber information about terminals by an EMS in a communication system that provides an enterprise communication environment according to an embodiment of the present invention.

Referring to FIG. 3, the communication system includes a terminal 300, an IP-PBX 305, an EMS 310, an integrated message server 315, an employee information DataBase (DB) 320, an EMS subscriber information DB 325, and an integrated message DB 330.

The IP-PBX 305 manages the employee information DB 320 that stores basic subscriber information about each employee in a company providing an intranet. The basic subscriber information about each employee includes a name, an address, a company, a department, a job position, an email address, and a user image of the employee, which are mapped to an intra-company phone number assigned to the employee for use in intra-company communication.

In addition to the basic subscriber information about each employee in the employee information DB 320, the integrated message server 315 manages user state information acquired from work-related histories of intra-company communication services. For example, the integrated message server 315 generates additional subscriber information from information acquired from a server supporting a chat program or a messenger service within the company and stores the additional subscriber information according to employee numbers in the integrated message DB 330. For example, the integrated message server 315 may acquire information about a user state such as 'working', 'out', or 'busy in call' from an intra-company messenger service. Then the integrated message server 315 stores the user state information as additional subscriber information in the integrated message DB 330. The integrated message server 315 adds the additional subscriber information to the basic subscriber information stored in the EMS subscriber information DB 325 by transmitting the additional subscriber information to the EMS 310. While the integrated message server 315 and the EMS 310 as shown in FIG. 3 are separately configured, by way of example, the integrated message server 315 may be incorporated into the EMS 310 as a single unit.

The EMS 310 registers terminals of employees that are to use intra-company communication through the IP-PBX 305, acquires basic subscriber information mapped to intra-company phone numbers of the registered terminals from the employee information DB 320, and stores and manages the basic subscriber information in the EMS subscriber information DB 325. Upon receipt of a CID from a registered terminal, the EMS 310 transmits basic subscriber information as basic caller information to the terminal 300. The EMS 310 acquires additional subscriber information about the terminal from the integrated message server 315 and transmits the additional subscriber information to the terminal 300.

For example, if the terminal 300 requests registration with the EMS 310, the EMS 310 registers the terminal 300 and then stores basic subscriber information about the terminal 300 acquired from the IP-PBX 305 in the EMS subscriber information DB 325. During the registration procedure, the EMS 310 and the terminal 300 exchange and store IDs and passwords for mutual authentication.

The EMS 310 periodically updates basic subscriber information mapped to the intra-company phone numbers of registered terminals by periodically synchronizing the EMS subscriber information DB 325 with the employee information DB 320. The subscriber information stored in the EMS subscriber information DB 325 includes additional subscriber information indicating the states of terminals acquired from the integrated message server 315 in addition to basic information about employees that is periodically synchronized with the employee information DB 320 and thus updated.

Accordingly, the EMS subscriber information DB 325 further includes additional fields to store the additional subscriber information by extending an existing employee information DB storing the basic subscriber information in an embodiment of the present invention. The additional fields store, as additional caller information, work-related history data such as the messaging states, registration states, terminal Medium Access Control (MAC) addresses, scheduling records, call records, and the like of subscribers, acquired from at least one server providing an intra-company communication service to each subscriber (herein, a server may be configured on a service basis). While not shown, the EMS 310 is connected to servers that provide and manage services for intra-company communication to generate additional subscriber information for the registered terminals. Upon reception of an incoming call to a terminal, the EMS 310 transmits a request for searching for keys mapped to the intra-company phone number of a caller and thus acquires work-related histories regarding the intra-company phone number mapped to the keys. A procedure of the EMS 310 for acquiring work-related histories mapped to an intra-company phone number and generating additional caller information out of the work-related histories will be described in detail below.

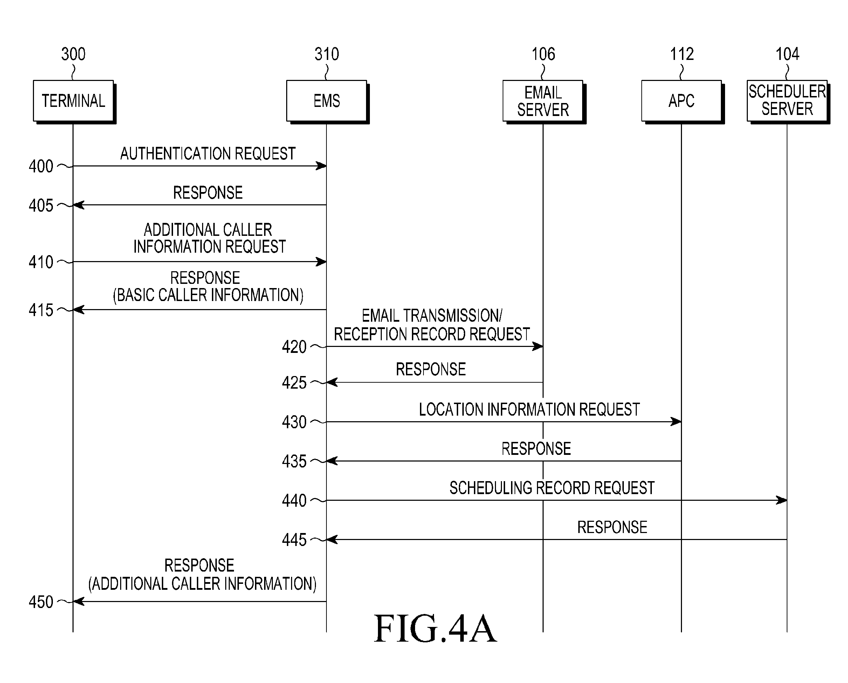

FIG. 4A is a signal flow diagram of an operation for providing additional caller information to a called terminal upon reception of an incoming call in a communication system supporting intra-company communication according to an embodiment of the present invention. For the convenience of description, the following description will be given with reference to the configurations of the communication systems illustrated in FIGS. 1 and 3.

Referring to FIG. 4A, the terminal 300 transmits an authentication request to the EMS 310 in step 400. The authentication request includes an ID and a password acquired by performing a registration procedure with the EMS 310.

In step 405, if the ID and the password received from the terminal 300 are identical to an ID and a password allocated to the terminal 300 by the EMS 310 during the registration procedure, the EMS 310 transmits a response to the terminal 300.

The terminal 300 transmits an additional caller information request including a CID acquired from a received call connection request to the EMS 310 in step 410. The additional caller information request message may further include display setting information that specifies how the additional caller information is to be displayed on a screen. An operation for setting display setting information by the terminal 300 will be described below in detail.

The EMS 310 transmits a response to the additional caller information request to the terminal 300 in step 415. The response includes basic caller information corresponding to the CID, and may be displayed on a screen of the terminal 300, as illustrated in FIGS. 2B and 2C. One thing to note herein is that the basic caller information is provided on a screen indicating an incoming call (referred to as an incoming call screen).

In steps 420 through 445, the EMS 310 acquires and generates the additional caller information. While it has been described as an example that the EMS 310 acquires work-related histories mapped to the CID of the caller, that is, the intra-company phone number of the caller by sequentially querying the email server 106, the AP/APC 112, and the scheduler server 104, the sequence of the procedures is not limited to a specific sequence and thus the query and acquisition procedures may be performed in any order, or even simultaneously. For example, the EMS 310 requests an email transmission/reception record between the terminal 300 and the caller terminal to the email server 106 in step 420. The additional caller information request includes the email addresses of the terminal 300 and the caller. As described before, it is assumed that the EMS 310 has acquired the email addresses from subscriber information mapped to the intra-company phone number of the terminal 300 from the employee information DB 320 managed by the IP-PBX 108.

Then the email server 106 searches for an email transmission/reception record mapped to the email addresses of the terminal 300 and the caller terminal among email transmission/reception records managed by the email server 106. In step 425, the email server 106 transmits the search results, that is, the email transmission/reception record between the terminal 300 and the caller terminal to the EMS 310. Then the EMS 310 stores the email transmission/reception record between the terminal 300 and the caller terminal as additional caller information about the caller.

In step 430, the EMS 310 requests information about the location of the caller as additional caller information to the APC 112. The request for the information about the location of the caller includes a phone number mapped to the CID. The APC 112 acquires a MAC address mapped to the caller based on the phone number and searches for an AP that the caller has connected to. The APC 112 transmits a response including the ID of the detected AP as the location information about the caller to the EMS 310 in step 435. The EMS 310 stores the MAC address and the AP ID, as the caller location information, as being additional caller information.

In step 440, the EMS 310 requests a scheduling record of the terminal 300 as additional caller information to the scheduling server 104 by transmitting a user ID of the caller. The scheduling record request includes the employee number of the terminal 300. The scheduler server 104 searches for a scheduling record mapped to the employee number of the terminal 300 among scheduling records managed by the scheduler server 104. In the presence of a scheduling record mapped to the employee number of the terminal 300, the scheduler server 104 transmits a response including the detected scheduling record to the EMS 310 in step 445. Then the EMS 310 stores the scheduling record of the terminal 300 as additional caller information.

In step 450, the EMS 310 may transmit at least one of the email transmission/reception record between the terminal 300 and the caller, the location information about the terminal 300, and the scheduling record of the terminal 300 as the additional caller information to the terminal 300. Upon receipt of the additional caller information, the terminal 300 may display the additional caller information on a screen in addition to display setting information input in advance by the user of the terminal 300. In an embodiment of the present invention, the additional caller information is displayed while the user of the terminal 300 answers the incoming call of the caller and is talking with the caller.

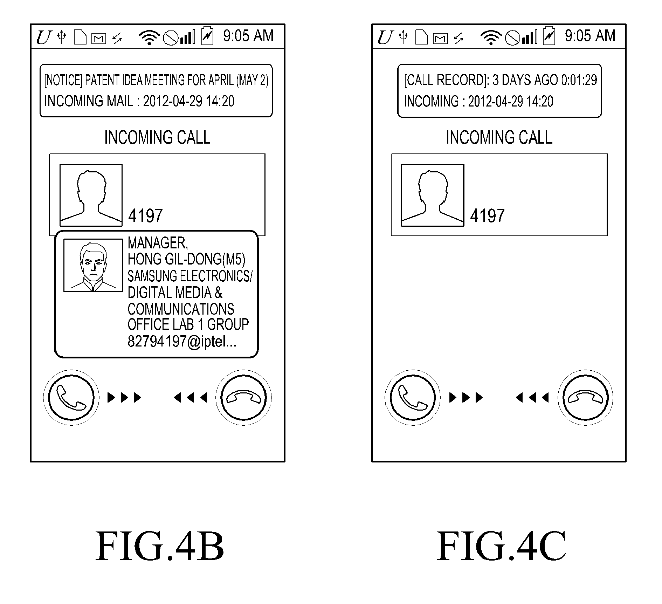

FIG. 4B illustrates a screen of a called terminal that displays basic caller information according to an embodiment of the present invention.

Referring to FIG. 4B, before the user of the terminal 300 answers an incoming call from a caller, basic caller information mapped to identification information about the caller is displayed in a new pop-up window over a phone number of the caller. Specifically, the basic caller information includes e.g. a name (Hong Gil-Dong), a job position (Manager), a company/group (Samsung Electronics/Digital Media & Communications), and a department (Office Lab 1 group) of the caller. If the user of the terminal 300 answers the call from the caller and is talking with the caller on the phone, additional caller information such as an email transmission/reception record between the terminal 300 and the caller, acquired in step 425 is displayed at the top of a screen indicating that the call is in progress (hereinafter, referred to as an active call screen). For example, the email transmission/reception record includes a mail title ([Notice] Patent idea meeting for February) and a mail reception date and time (2012-04-29 14:20) in FIG. 4B.

FIG. 4C illustrates a screen of a called terminal that displays additional caller information according to an embodiment of the present invention.

Referring to FIG. 4C, in addition to basic caller information mapped to identification information about a caller, a call record is displayed as additional caller information on a screen of the terminal 300 that has received a response to an additional caller information request from the EMS 310. For example, the call record indicates an incoming or outgoing call and an incoming or outgoing date and time. In an embodiment of the present invention, the call record may be displayed on an active call screen after the user of the terminal 300 answers the incoming call from the caller.

After recognizing reception of the incoming call from a caller, the EMS transmits caller information to a called terminal in the following two steps in the embodiment of the present invention. First, the EMS 310 acquires basic subscriber information about the terminal from the employee information DB 320 managed by the IP-PBX 305. The EMS 310 transmits the basic subscriber information as basic caller information to the terminal 300 on an incoming call screen of the terminal that indicates a call is incoming from the caller. The EMS 310 transmits an email address, user ID, name, etc. mapped to the employee number of the caller to servers that provide intra-company communication services and acquires service histories mapped to the email address, user ID, name, etc. of the caller from the servers. The EMS 310 transmits the service histories as additional caller information to the terminal on an active call screen displayed on the terminal 300 after the user of the terminal answers the incoming call from the caller and is talking with the caller. In this case, the additional caller information provides the latest service histories between the user of the terminal and the caller.

In another embodiment of the present invention, the EMS 310 periodically accesses the employee information DB 320 managed by the IP-PBX 305 and thus periodically updates basic caller information mapped to a corresponding CID. In addition, the EMS 310 periodically accesses the servers that provide services in the company intranet irrespective of an incoming call to a terminal registered with the EMS 310. If a registered terminal is located within the company intranet, the EMS preliminarily collects work histories regarding the CID of the terminal and stores the collected work histories in the EMS subscriber information DB 325. In this case, upon reception of an incoming call to the terminal 300, the procedure for requesting additional caller information to each server within the company intranet is also performed as in the foregoing embodiment of the present invention. In this manner, the EMS 310 can update additional caller information for a terminal before and after an incoming call.

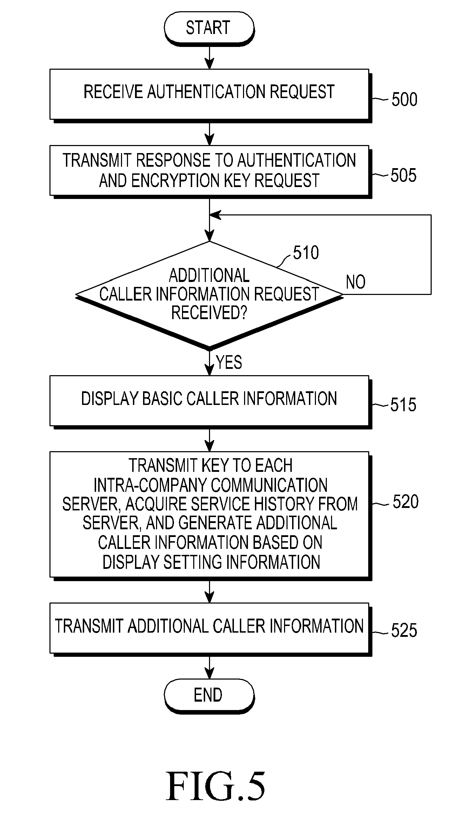

FIG. 5 is a flowchart illustrating an operation of an EMS according to an embodiment of the present invention. For convenience of description, the operation of the EMS will be described in the context of the communication system illustrated in FIG. 3.

Referring to FIG. 5, in step 500 the EMS 310 receives an authentication request from a terminal that has received a call connection request. The authentication request includes an ID and a password for authentication. It is assumed that the terminal has acquired the ID and the password through a registration procedure with the EMS 310.

In step 505, if the received ID and password are identical to an ID and password allocated to the terminal, the EMS 310 notifies the terminal of completion of the authentication and encryption procedure.

The EMS 310 determines whether an additional caller information request including the CID of an incoming call has been received from the terminal in step 510. The additional caller information request may include display setting information for additional caller information in an embodiment of the present invention. If the additional caller information request has not been received, the EMS 310 awaits reception of the additional caller information request.

Upon receipt of the additional caller information request from the terminal, the EMS 310 displays basic caller information about a caller on an incoming call screen of the terminal in step 515.

In step 520, the EMS 310 transmits keys mapped to the employee number of the terminal to servers that provide intra-company communication services, requesting service histories to the servers, acquires the service histories from the servers, and generates additional caller information from the acquired service histories, in correspondence with the display setting information. The EMS 310 transmits the additional caller information to the terminal in step 525. Thus, the terminal displays the additional caller information based on the display setting information on an active call screen.

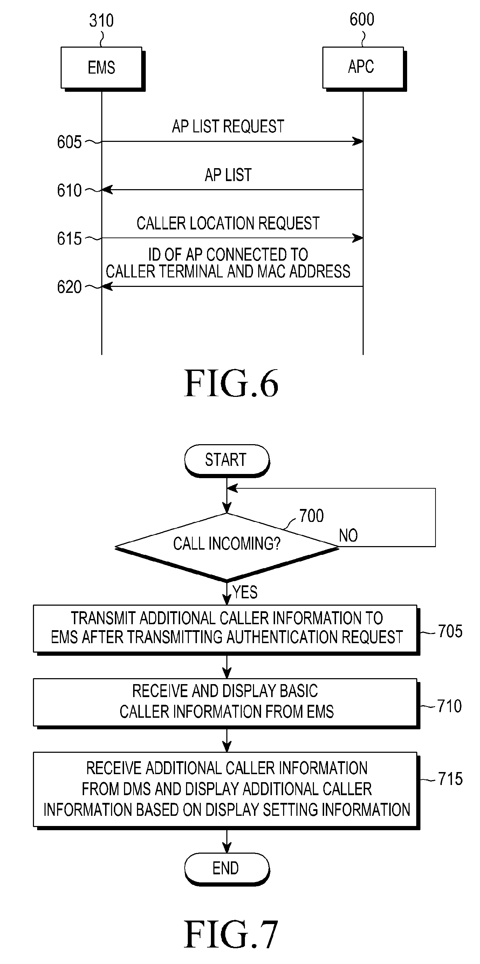

FIG. 6 is a signal flow diagram of an operation for acquiring additional caller information in an EMS according to an embodiment of the present invention. Herein, location information is taken as an example of additional caller information.

Referring to FIG. 6, the EMS 310 requests an AP list to the APC 600 in step 605 and receives an AP list including AP location information from the APC 600 in step 610. In step 615, the EMS 310 transmits a caller location request to the APC 600. The EMS 310 searches for an employee number of a caller mapped to a CID acquired from a called terminal to which a call is incoming from the caller and transmits a phone number mapped to the detected employee number of the caller in the caller location request.

In step 620, the APC 600 transmits a MAC address mapped to the phone number and the ID of an AP to which the caller has connected to the EMS 310. Subsequently, the EMS 310 stores the MAC address as location information in an additional field mapped to the caller in the EMS subscriber information DB 325 of FIG. 3. Then the EMS 310 may additionally provide the ID of the AP as location information about the caller to an active call screen of the called terminal after the called terminal answers the incoming call.

FIG. 7 is a flowchart illustrating an operation of a terminal according to an embodiment of the present invention.

Referring to FIG. 7, upon receipt of a call request from a caller, the terminal 300 recognizes an incoming call in step 700. In step 705, the terminal transmits an authentication request including an ID and a password acquired during a registration procedure with an EMS to the EMS 310 and receives a response from the EMS 310. Then the EMS transmits an additional caller information request including the CID of the incoming call and receives a response. Herein, the additional caller information request may include the aforedescribed display setting information. In this case, the terminal 300 transmits the display setting information to the EMS 310 so that additional caller information may be displayed on a screen based on the display setting information, upon reception of an incoming call.

In step 710, the terminal 300 receives basic caller information from the EMS 310 and displays the basic caller information on an incoming call screen. The basic caller information includes basic subscriber information about a caller. The terminal 300 may receive additional caller information from the EMS 310 and display the additional caller information on an active call screen in correspondence with the display setting information in step 715.

In an embodiment of the present invention, a user of the terminal may preset the display setting information during terminal initialization in order to additionally receive service histories mapped to an extension number of a caller from among service histories of a called terminal, upon reception of an incoming call from the caller.

Specifically, if the terminal is located within the coverage of an intra-company communication system, the terminal may be used as a general mobile phone by connection to a mobile communication network within a company intranet or as an intra-company phone using an IP within the company intranet. Accordingly, different display modes may be set depending on the operation mode of the terminal; that is, whether the terminal operates as a mobile phone or an intra-company phone. In an embodiment of the present invention, the terminal sets a display mode as display setting information. The display mode may be, for example, an intra-company phone mode or a mobile phone mode.

In the intra-company phone mode, the terminal is used as an Internet phone in the company intranet by connecting to an IP network and displays all additional caller information on an incoming call screen. If the additional caller information includes a plurality of items, the plurality of items may be arranged as buttons at the bottom of the call incoming screen. Only when the terminal receives information mapped to a specific item among the additional items from the EMS, the button corresponding to the item is activated. That is, if information mapped to a specific item is not provided, the button corresponding to the item is deactivated.

Thus, the user of the terminal may display and view information under basic caller information on a screen by pressing the button corresponding to an item associated with the information from among at least one activated item.

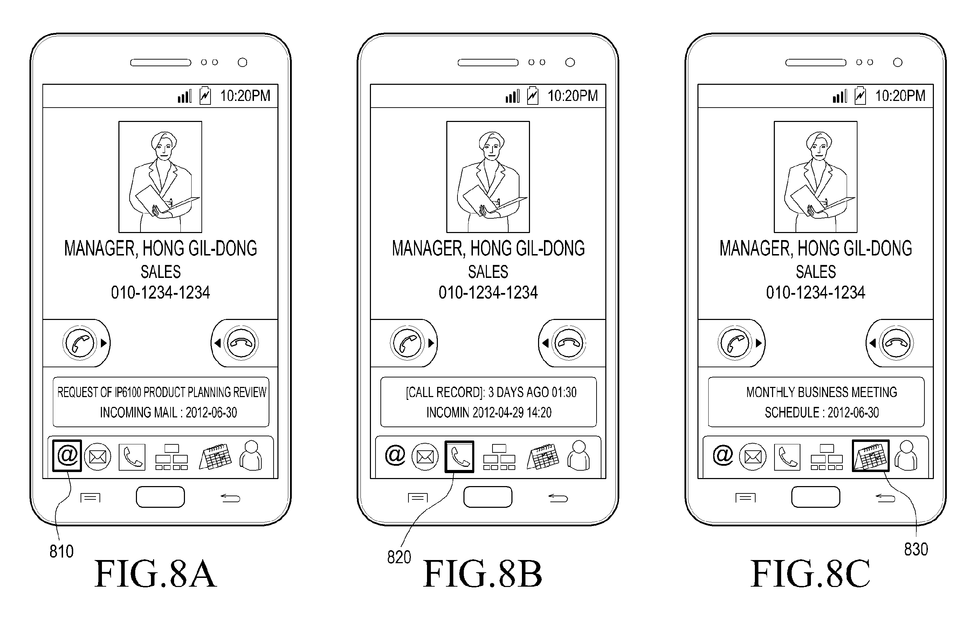

FIGS. 8A, 8B and 8C illustrate screens of a called terminal operating in an intra-company phone mode, which display additional caller information, upon reception of an incoming call according to an embodiment of the present invention.

Referring to FIGS. 8A, 8B and 8C, basic caller information about a caller is displayed at a fixed position, herein, at the center of an incoming call screen in the intra-company phone mode. The basic caller information includes, for example, an image (photo), a name (Hong Gil-Dong), a job position (Manager), a department (Sales), and a phone number (010-1234-1234) of a caller.

Herein, it will be described by way of example that additional caller information about the caller includes a mail transmission/reception record, a message transmission/reception record, a call record, scheduling information, and a messenger record of the caller. In FIG. 8A, a button 810 mapped to a mail transmission/reception record item is activated among items of the additional caller information on the screen of the called terminal, in addition to the basic caller information on a screen. In FIG. 8B, a button 820 mapped to a call record item is activated among the items of the additional caller information on the active call screen, in addition to the basic caller information. In FIG. 8C, a button 830 mapped to a scheduling information item is activated among the items of the additional caller information on the active call screen, in addition to the basic caller information._In FIGS. 8A, 8B and 8C, the activated buttons are outlined in a dark line.

In the mobile phone mode, it is difficult to replace an incoming call screen using an application basically installed in a terminal in an embodiment of the present invention. Therefore, only one item of additional caller information is provided in a dialog pop-up window on an incoming call screen displaying basic caller information. Therefore, the user of the terminal may preset whether to receive additional caller information on an incoming call screen, upon reception of an incoming call in the mobile phone mode. If additional provisioning of additional caller information is set, the user of the terminal may specify the display position of the additional caller information provided in the pop-up window.

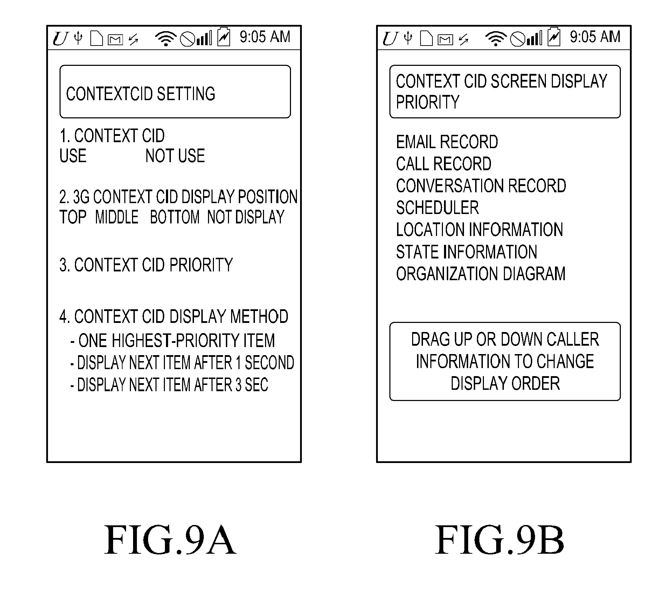

FIGS. 9A and 9B illustrate screens of a called terminal, which display display setting information in relation to additional caller information according to an embodiment of the present invention.

Referring to FIG. 9A, display setting information includes an option to select whether additional caller information is to be displayed, an option to determine the position of a pop-up window displaying the additional caller information on a screen of a called terminal, an option to determine the priority level of items included in the additional caller information, and an option to determine how the additional caller information is displayed.

Specifically, the user determines whether to display additional caller information in addition to basic caller information about a caller on a screen of the called terminal by the option to determine whether to use a context CID. Therefore, this option includes a Use item and a Not Use item. The user determines the position of a pop-up window displaying the additional caller information over an incoming call screen that displays the basic caller information about the caller by a 3^{rd} Generation (3G) context CID display position option. For example, selection items to select one of areas pre-defined based on predetermined thresholds on a screen, for the pop-up window are given as 'Top', 'Middle', and 'Bottom'.

An option to a context CID display scheme is used to select a manner in which pop-up windows for a plurality of items of additional caller information are displayed. For example, it is possible to set only a predetermined number of higher-priority items to be displayed or to set pop-up windows to be displayed at predetermined time intervals in order of priority. For example, display of a pop-up window with one higher-priority item, display of a pop-up window with the next priority level after 1 second, and display of a pop-up window with the next priority level after 3 seconds are additionally displayed as selection items. The timing or order of displaying pop-up windows having items of additional caller information is given purely as an example and thus various display timings and orders are available.

A context CID prioritization option is used to determine the order of displaying items above all other items of additional caller information. If the context CID prioritization option is selected, items of the additional caller information to be displayed on the next screen, for example, an email record, a call record, a conversation record, a schedule, location information, state information, and an organization diagram are listed in FIG. 9B. The user may arrange the items in an intended display order by dragging them. Thus, when the additional caller information is provided, items of the additional caller information are displayed in the determined display order on a screen of the terminal.

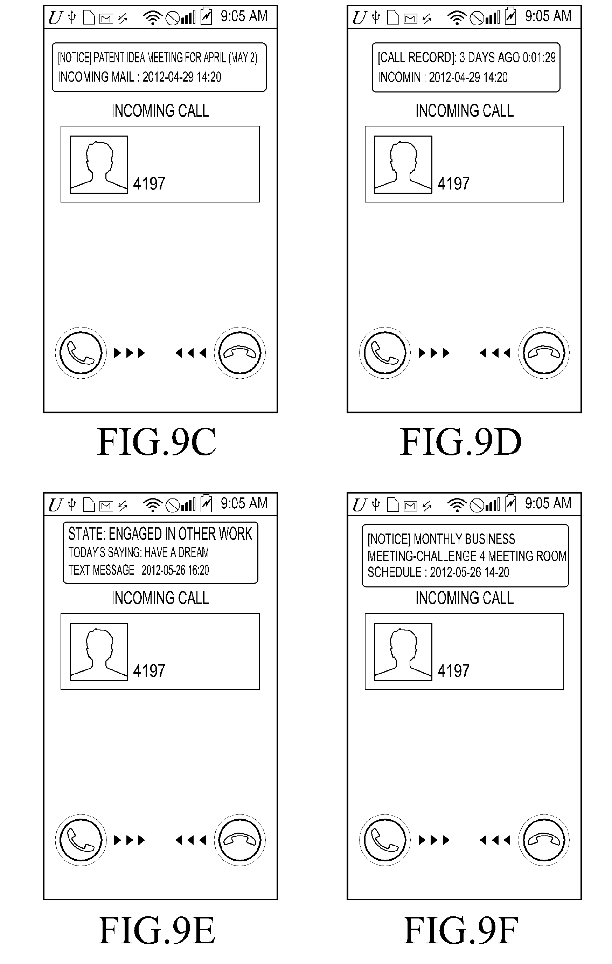

FIGS. 9C, 9D, 9E and 9F illustrate screens of a called terminal operating in a mobile call mode, which display additional caller information upon reception of an incoming call according to an embodiment of the present invention.

Referring to FIG. 9C, an email reception record is displayed in a pop-up window at the top of an incoming call screen displaying basic caller information about a caller.

Referring to FIG. 9D, a call record is displayed in a pop-up window at the top of the call incoming screen displaying the basic caller information about the caller.

Referring to FIG. 9E, a messenger state (e.g. engaged in other work), a profile, and a text transmission/reception record of the caller are displayed in a pop-up window at the top of an incoming call screen displaying basic caller information about a caller.

Referring to FIG. 9F, a scheduling record with the caller, specifically a conference title, a conference room, and a conference date and time are displayed in a pop-up window at the top of an incoming call screen displaying basic caller information about a caller.

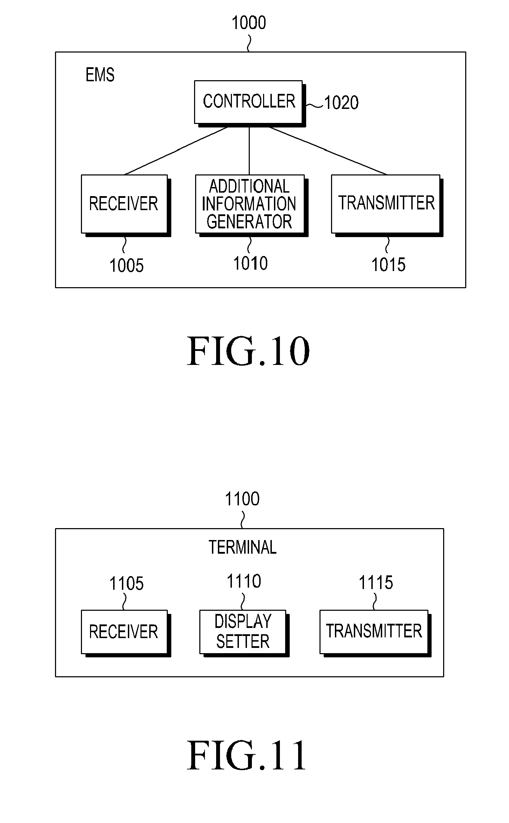

FIG. 10 is a block diagram of an EMS according to an embodiment of the present invention.

Referring to FIG. 10, an EMS 1000 includes a receiver 1005, an additional information generator 1010, a transmitter 1015, and a controller 1020. For convenience of description, the components of the EMS 1000 are shown as being separately configured according to operations in the embodiments of the present invention. However, two or more components may be integrated into one unit or a single component may be separated into a plurality of units.

The receiver 1005 receives an additional caller information request including a CID of a caller from a terminal which has completed a registration procedure. The additional caller information request may include display setting information in relation to additional caller information. While not shown, the controller 1020 controls the transmitter 1015 to transmit basic subscriber information mapped to the employee number of the terminal and the CID of the caller terminal acquired from the EMS subscriber information DB 325, as basic caller information to the terminal so that the terminal may display the basic caller information on an incoming call screen. The additional information generator 1010 provides keys mapped to the employee numbers of the terminal and the caller to servers that provide intra-company communication services and acquires service histories mapped to the keys through the receiver 1005, under the control of the controller 1020. The keys include the email addresses, messenger IDs, and employee numbers of the terminal and the caller.

The additional information generator 1010 generates the service histories as additional caller information. The transmitter 1015 transmits the additional caller information to the terminal. Thus, the terminal displays the additional caller information in correspondence with the display setting information on an active call screen.

FIG. 11 is a block diagram of a terminal according to an embodiment of the present invention.

Referring to FIG. 11, a terminal 1100 includes a receiver 1105, a display setter 1110, and a transmitter 1115. For convenience of description, the components of the terminal 1100 are shown as being separately configured according to operations in the embodiments of the present invention. However, two or more components may be integrated into one unit or a single component may be separated into a plurality of units.

The display setter 1110 sets specific information with which to display additional caller information upon reception of an incoming call by setting a display mode according to a mobile phone mode or an intra-company phone mode of the terminal 1100. Display setting information includes options to select the order, position, and priority of a plurality of items of the additional caller information on a screen of the called terminal.

As the receiver 1105 receives a call request from a caller, an incoming call is recognized. Then the transmitter 1115 transmits an additional caller information request including a CID of the caller to the EMS. Then the receiver 1105 receives a response to the additional caller information request from the EMS. The additional caller information request includes the aforedescribed display setting information. That is, the terminal may specify a method for arranging additional caller information on a screen upon reception of an incoming call by transmitting the display setting information to the EMS. The response includes basic caller information having basic subscriber information mapped to the employee numbers of the terminal and the caller.

Upon receipt of the basic caller information from the EMS at the receiver 1105, the display setter 1110 displays the basic caller information on an incoming call screen in the terminal 1100. Then the receiver 1105 receives additional caller information about the caller from the EMS. The display setter 1110 displays the additional caller information in correspondence with the preset display setting information on an active call screen.

As is apparent from the above description of the present invention, if an incoming call is received through an IP-PBX in a communication system supporting enterprise mobility communication, service histories related to a calling terminal and a called terminal are acquired from servers that provide communication services in an intra-enterprise network and provided as additional caller information on a screen indicating an active call state. Therefore, upon reception of the incoming call, a user can save time and efficiency in work by additional caller information.

It should be noted that the embodiments of the present invention, as described above, typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the embodiments of the present invention as described above. Alternatively, one or more processors operating in accordance with stored instructions may implement the functions associated with the embodiments of the present invention as described above. Such instructions may be stored on one or more processor readable mediums. Examples of the processor readable mediums include a ROM, a RAM, CD-ROMs, magnetic tapes, floppy disks, and optical data storage devices. The processor readable mediums can also be distributed over network coupled computer systems so that the instructions are stored and executed in a distributed fashion. Also, functional computer programs, instructions, and instruction segments for accomplishing the present invention can be easily construed by programmers skilled in the art to which the present invention pertains.

While the invention has been shown and described with reference to certain embodiments thereof, it will be understood by those skilled in the art that various changes in form and details may be made therein without departing from the spirit and scope of the invention as defined by the appended claims and their equivalents.

## Claims

1. A method for providing caller information about a caller to a terminal, upon reception of an incoming call from the caller in a communication system supporting enterprise mobility communication, the method comprising:
receiving a phone number of the caller from the terminal that has registered with an enterprise mobility system;
accessing at least one server providing a service for enterprise mobility communication and acquiring a service history between the terminal and the caller; and
providing the service history on a screen of the terminal, indicating an active call state.

2. The method of claim 1, wherein acquiring the service history comprises:
accessing an Internet Protocol Private Branch eXchange (IP-PBX) and periodically synchronizing basic subscriber information with regards to extension numbers stored in the IP-PBX;
providing subscriber information mapped to the terminal and the caller from among the synchronized basic subscriber information to the at least one server; and
acquiring a service history mapped to the subscriber information from the at least one server and storing the acquired service history in a database.

3. The method of claim 1, wherein the service history includes at least one of a call record, a message transmission/reception record, a messenger state, an email record, and a scheduling record between the terminal and the caller, and location information about the caller, and
wherein the subscriber information includes at least one of email addresses, phone numbers, messenger Identifiers (IDs), and employee numbers of the terminal and the caller.

4. The method of claim 1, wherein providing the service history comprises displaying the service history in correspondence with display setting information received in advance from the terminal, and
wherein the display setting information includes at least one of an option to determine display priority levels of service histories mapped to an employee number of the caller, an option to determine a position of the service histories on the screen, and an option to determine a display time and a display method.

5. The method of claim 4, wherein providing the service history comprises providing the at least one option by differentiating a mobile phone mode from an Internet phone mode, the mobile phone mode being a mode in which the terminal communicates through a mobile communication network and the Internet phone mode being a mode in which the terminal operates for enterprise mobility communication.

6. A method for receiving caller information about a call at a terminal, upon reception of an incoming call from a caller in a communication system supporting enterprise mobility communication, the method comprising:
transmitting a phone number of the caller to an enterprise mobility system, upon recognition of the reception of the incoming call; and
receiving basic subscriber information about the terminal and the caller from an Internet Protocol Private Branch eXchange (IP-PBX) and a service history mapped to the basic subscriber information from the enterprise mobility system.

7. The method of claim 6, wherein the service history is a service history mapped to the subscriber information about the terminal and the caller, acquired from at least one server that provides a service for enterprise mobility communication through the enterprise mobility system,
wherein the service history includes at least one of a call record, a message transmission/reception record, a messenger state, an email record, and a scheduling record between the terminal and the caller, and location information about the caller, and
wherein the subscriber information includes at least one of email addresses, phone numbers, messenger Identifiers (IDs), and employee numbers of the terminal and the caller.

8. The method of claim 6, further comprising transmitting display setting information to the enterprise mobility system, for use in displaying the service history on a screen indicating an active call state, and
wherein the display setting information includes at least one of an option to determine display priority levels of service histories mapped to an employee number of the caller, an option to determine a position of the service histories on the screen, and an option to determine a display time and a display method.

9. An enterprise mobility system for providing caller information about a caller to a terminal, upon reception of an incoming call from the caller at the terminal in a communication system supporting enterprise mobility communication, the enterprise mobility system comprising:
a receiver configured to receive a phone number of the caller from the terminal that has registered with the enterprise mobility system;
a controller configured to access at least one server providing a service for enterprise mobility communication and to acquire a service history between the terminal and the caller; and
a transmitter configured to provide the service history on a screen of the terminal, indicating an active call state.

10. The enterprise mobility system of claim 9, wherein the controller accesses an Internet Protocol Private Branch eXchange (IP-PBX), periodically synchronizes basic subscriber information with regards to extension numbers stored in the IP-PBX, provides subscriber information mapped to the terminal and the caller from among the synchronized basic subscriber information to the at least one server, acquires a service history mapped to the subscriber information from the at least one server, and stores the acquired service history in a database.

11. The enterprise mobility system of claim 9, wherein the service history includes at least one of a call record, a message transmission/reception record, a messenger state, an email record, and a scheduling record between the terminal and the caller, and location information about the caller, and
wherein the subscriber information includes at least one of email addresses, phone numbers, messenger Identifiers (IDs), and employee numbers of the terminal and the caller.

12. The enterprise mobility system of claim 9, wherein the controller controls display of the service history in correspondence with display setting information received in advance from the terminal, and
wherein the display setting information includes at least one of an option to determine display priority levels of service histories mapped to an employee number of the caller, an option to determine a position of the service histories on the screen, and an option to determine a display time and a display method.

13. The enterprise mobility system of claim 12, wherein the at least one option is set by differentiating a mobile phone mode from an Internet phone mode, the mobile phone mode being a mode in which the terminal communicates through a mobile communication network and the Internet phone mode being a mode in which the terminal operates for enterprise mobility communication.

14. A terminal for receiving caller information about a call, upon reception of an incoming call from a caller in a communication system supporting enterprise mobility communication, the terminal comprising:
a transmitter configured to transmit a phone number of the caller to an enterprise mobility system, upon recognition of reception of the incoming call; and
a receiver configured to receive basic subscriber information about the terminal and the caller from an Internet Protocol Private Branch eXchange (IP-PBX) and a service history mapped to the basic subscriber information from the enterprise mobility system.

15. The terminal of claim 14, wherein the service history is a service history mapped to the subscriber information about the terminal and the caller, acquired from at least one server that provides a service for enterprise mobility communication through the enterprise mobility system,
wherein the service history includes at least one of a call record, a message transmission/reception record, a messenger state, an email record, and a scheduling record between the terminal and the caller, and location information about the caller, and
wherein the subscriber information includes at least one of email addresses, phone numbers, messenger Identifiers (IDs), and employee numbers of the terminal and the caller.

16. The terminal of claim 15, wherein the transmitter transmits display setting information to the enterprise mobility system, for use in displaying the service history on a screen indicating an active call state, and
wherein the display setting information includes at least one of an option to determine display priority levels of service histories mapped to an employee number of the caller, an option to determine a position of the service histories on the screen, and an option to determine a display time and a display method.
